# EUROPEAN PATENT SPECIFICATION

(11) **EP 1 519 345 B1**
(45) Date of publication and mention of the grant of the patent: **14.02.2007**
(21) Application number: 03029031.6
(22) Date of filing: 16.12.2003
(51) Int. Cl.: G09B 23/32

(54) **An arm assembly for a crash test dummy**
Armaufbau für eine Crashtest-Puppe
Assemblage de bras pour mannequin-test

(30) Priority: 25.09.2003 KR 2003066538
(43) Date of publication of application: 30.03.2005
(73) Proprietor: HYUNDAI MOTOR COMPANY, Seoul (KR)
(72) Inventor: Choi, Seong Chull, Namyang-dong Hwaseong-city Gyunggi-do (KR)
(74) Representative: Viering, Jentschura & Partner

(56) References cited:
- WO-A-98/47122
- US-A- 4 521 924
- US-A- 4 685 928
- US-A- 5 741 989

## Description

### FIELD OF THE INVENTION

The present invention relates to an arm assembly for a crash test dummy according to the preamble of claim 1.

### BACKGROUND OF THE INVENTION

An arm assembly having the features of the preamble of claim 1 is known from documents US-A-5741989.

Crash test dummies are widely used for vehicle crash tests, and they are important devices for estimating damage to vehicle occupants during accidents.

A conventional arm assembly of a crash test dummy includes an upper arm portion, a lower arm portion, and a hand portion. Such portions are generally connected together through universal joints. Such a conventional arm assembly cannot realize a force of a human arm, so results of the test are not accurate.

Furthermore, for a crash test, fingers of the hand unit are generally fixed to a steering wheel with a fixing means such as tape. Because the fingers are fixed to the wheel, it is difficult to realize accurate results because the fingers cannot realize a grasping force of a human hand.

The information disclosed in this Background of the Invention section is only for enhancement of understanding of the background of the invention, and should not be taken as an acknowledgement or any form of suggestion that this information forms the prior art that is already known to a person skilled in the art.

### SUMMARY OF THE INVENTION

The present invention provides an arm assembly having the features of claim 1. Further embodiments of the invention are described in the dependent claims.

Embodiments of the present invention provide an arm assembly of a crash test dummy that acts similarly to a human arm.

In another preferred embodiment of the present invention, an arm assembly for a crash test dummy comprises an upper arm unit, a lower arm unit, a wrist joint, and a hand unit. An upper portion of the upper arm unit is connected to a body of the crash test dummy, and the lower arm unit is pivotally connected to a lower end portion of the upper arm unit. A first end of the wrist joint is rotatably connected to the lower arm unit, while the hand unit is pivotally connected to a second end of the wrist joint. The hand unit is configured to grasp a steering wheel of a vehicle and to be separated from the steering wheel by a force.The hand unit comprises a first plate, a second plate, a first connecting rod, a second connecting rod, a first finger unit, a second finger unit, and an elastic member. The first and second plates are disposed to face each other. The first connecting rod is coupled respectively to the first and second plates, and the wrist joint is pivotally connected to the first connecting rod. The second connecting rod is coupled respectively to the first and second plates such that the second connecting rod restricts pivotal motions of the wrist joint with respect to the first connecting rod. The first finger unit is pivotally coupled to the first and second plates. The second finger unit is pivotally coupled to the first and second plates, the second finger unit being connected to the first finger unit such that the second finger unit moves together with the first finger unit. The elastic member biases the first finger unit so that the first finger unit and the second finger unit are in a grasping state.

It is preferable that the hand unit further comprises a third connecting rod connected respectively to the first and second plates such that the third connecting rod restricts a pivotal motion of the first finger unit.

Preferably, the hand unit further comprises a fourth connecting rod connected respectively to the first and second plates such that the fourth connecting rod restricts a pivotal motion of the second finger unit.

It is further preferable that the elastic member is a coil spring.

It is further preferable that the driving device comprises a motor and a gear unit that is driven by the motor. The gear unit is configured to drive the lower arm unit to undergo pivotal motions.

It is preferable that the hand unit comprises a first plate and a second plate that are disposed to face each other, a circular plate having a through hole formed in a center portion thereof is provided in a second end of the wrist joint, the circular plate is disposed between the first and second plates, and the circular plate is connected to the first and second plates through a connecting rod that is rotatably inserted into the through hole.

It is further preferable that a friction member is disposed between the circular plate of the wrist joint and the first and second plates of the hand unit.

### BRIEF DESCRIPTION OF THE DRAWINGS

The accompanying drawings, which are incorporated in and constitute a part of the specification, illustrate an embodiment of the invention, and, together with the description, serve to explain the principles of the invention, where:
FIG. 1 shows a crash test dummy that includes an arm assembly according to the preferred embodiment of the present invention;
FIG. 2 shows an arm assembly according to the preferred embodiment of the present invention;
FIG. 3 schematically shows a driving device for driving a lower arm unit of the arm assembly according to the preferred embodiment of the present invention;
FIGs. 4 and 5 show a hand unit of the arm assembly according to the preferred embodiment of the present invention; and
FIG. 6 shows a connection between a wrist joint and the hand unit.

### DETAILED DESCRIPTION OF THE PREFERRED EMBODIMENTS

Hereinafter, a preferred embodiment of the present invention will be described in detail with reference to the accompanying drawings.

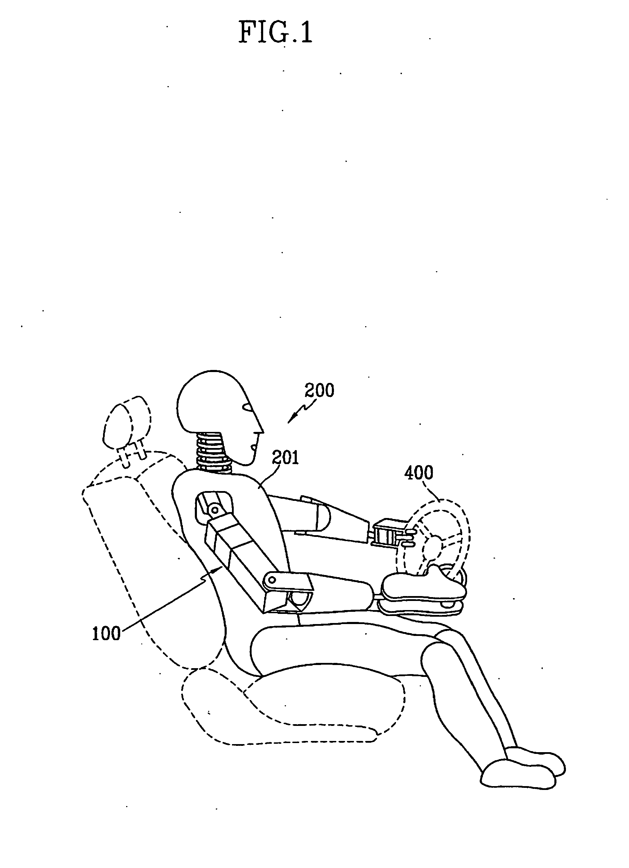

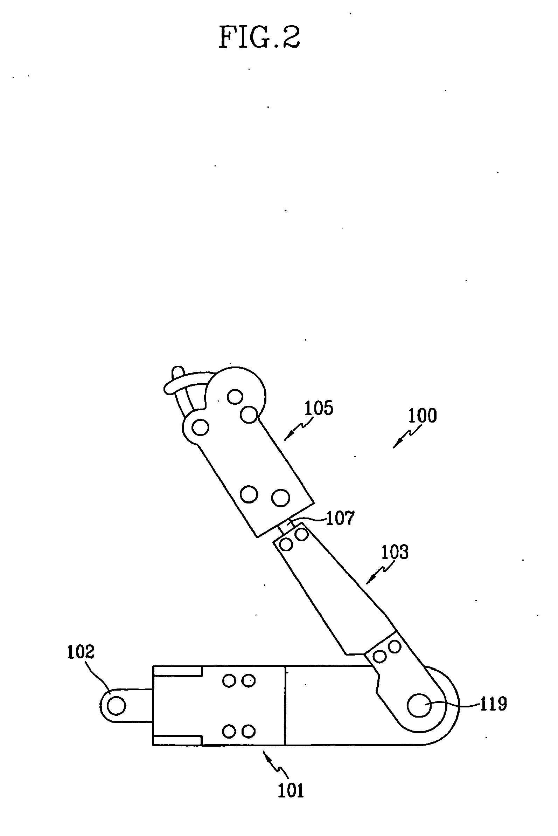

As shown in FIGs. 1 and 2, an arm assembly 100 for a crash test dummy 200 according to the preferred embodiment of the present invention includes an upper arm unit 101 and a lower arm unit 103.

An upper end portion of the upper arm unit 101 is pivotally connected to a body 201 of the crash test dummy 200 through a link portion 102. Preferably, a pivotal motion of the upper arm unit 101 with respect to the body 201 of the crash test dummy 200 is allowed within a predetermined range.

The lower arm unit 103 is pivotally connected to a lower end portion of the upper arm unit 101, and a hand unit 105 is connected to the lower arm unit 103 through a wrist joint 107.

The upper arm unit 101 includes a housing 109 and a driving device 111. The driving device 111 is disposed inside the housing 109, and the driving device 111 drives the lower arm unit 103 to undergo pivotal motions.

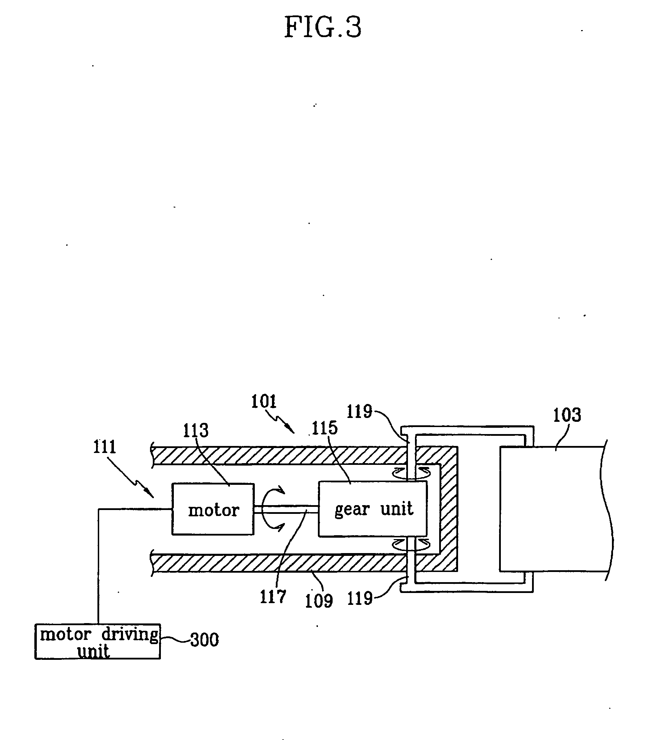

As shown in FIG. 3, it is preferable that the driving device 111 includes a motor 113 and a gear unit 115 connected to the motor 113. The motor 113 is controlled by a motor driving unit 300. For example, the motor 113 can be a DC motor. The motor driving unit 300 may include a power source, an interface, a controller, or the like.

The gear unit 115 can be any device that can receive a rotational force from the motor 113 and reduce a rotational speed. Finally, the gear unit 115 rotates a rotating shaft 119, causing the lower arm unit to rotate.

For example, the gear unit 115 can be a right angle type "NR34" (reducing ratio 100:1) that is made by the "BAYSIDE" company.

In the arm assembly 100 according to the preferred embodiment of the present invention, the lower arm unit 103 is driven by the motor 113 and the gear unit 115 during a crash test, so that an active force of a human arm can be realized.

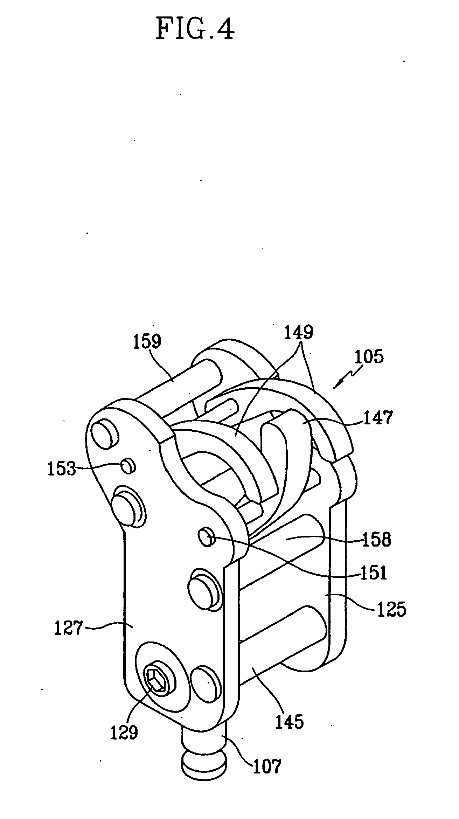

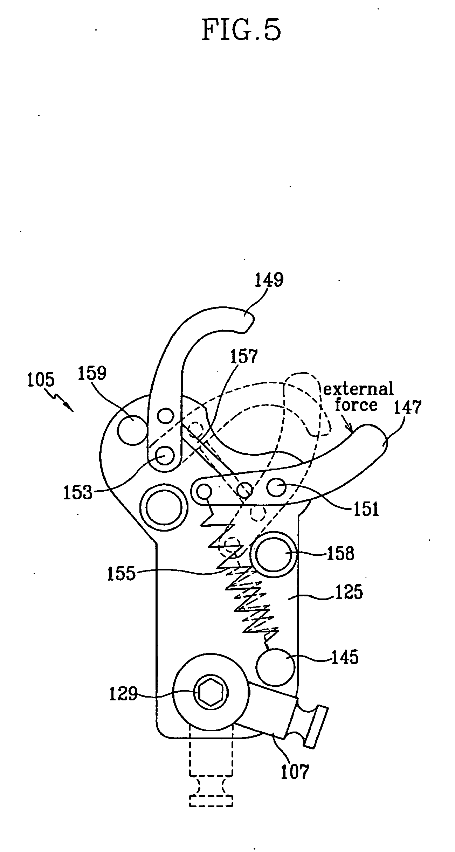

As shown in FIGs. 4 and 5, the hand unit 105 includes a first plate 125 and a second plate 127 that are disposed to face each other, with a predetermined distance therebetween. A first connecting rod 129 is connected respectively to the first and second plates 125 and 127, and the wrist joint 107 is pivotally connected thereto. As an example, the first connecting rod 129 can be a bolt.

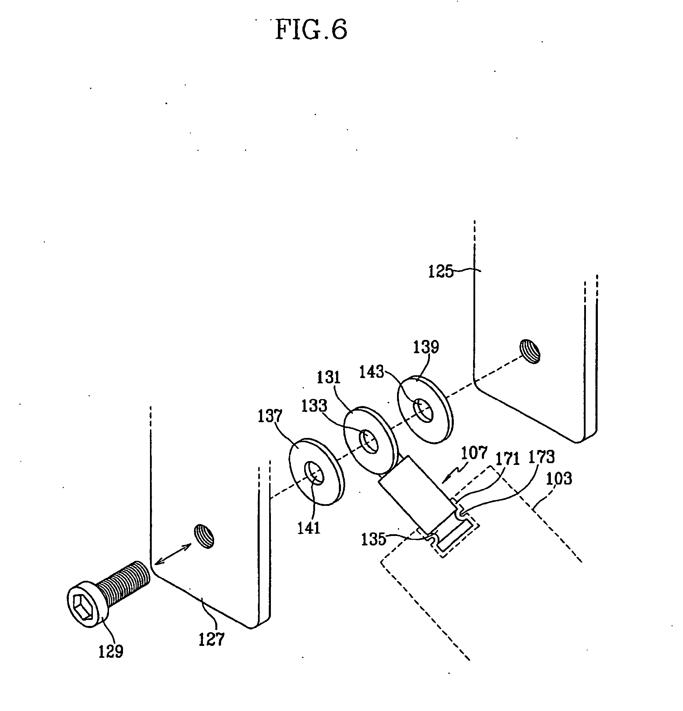

As shown in FIG. 6, a circular plate 131 is provided in one end portion of the wrist joint 107, and a through hole 133 is formed in a center portion of the circular plate 131. The first connecting rod 129 is inserted in the through hole 133, so that the hand unit 105 is pivotally connected to the wrist joint 107.

A circular recession 135 is formed on an outer periphery of the other end of the wrist joint 107, and the wrist joint 107 is rotatably connected to the lower arm unit 103 by way of the circular recession 135.

That is, as shown in FIG. 6, the wrist joint 107 is inserted in a cylindrical recession 171 formed in the lower arm unit 103. A circular protrusion 173 is formed on an inner periphery of the cylindrical recession 171. The wrist joint 107 is disposed in the cylindrical recession 171 of the lower arm unit 10 such that the circular protrusion 173 is fitted into the circular recession 135. Accordingly, the wrist joint 107 is rotatably connected to the lower arm unit 103.

Friction members 137 and 139 are disposed on both sides of the circular plate 131. Through holes 141 and 143 are formed respectively to the friction members 137 and 139, and the first connecting rod 129 is inserted into the through holes 141 and 143. By rotating the first connecting rod 129, friction forces between the circular plate 131 and the friction members 137 and 139 can be changed.

As shown in FIG. 5, a second connecting rod 145 is provided near the first connecting rod 129 such that the second connecting rod 145 can restrict a pivot motion (counter-clockwise rotation) of the wrist joint 107. The second connecting rod 145 is connected respectively to the first and second plates 125 and 127.

The hand unit 105 includes a first finger 147 and a pair of second fingers 149, which correspond to fingers of a human hand. The first finger 147 is pivotally connected to a connecting rod 151 that is connected respectively to the first and second plates 125 and 127. Similarly, the second finger 149 is pivotally connected to a connecting rod 153 that is connected respectively to the first and second plates 125 and 127.

As shown in FIG. 5, a first end of an elastic member 155 is connected to the first finger 147, and a second end of the elastic member 155 is connected to the second connecting rod 145. As an example, the elastic member 155 can be a coil spring.

The first finger 147 and the second finger 149 are connected to each other through a connecting member 157. One end of the connecting member 157 is pivotally connected to the first finger 147, and the other end of the connecting member 157 is pivotally connected to the second finger 149. Therefore, if the first finger 147 rotates with respect to the connecting rod 151, the second finger 149 rotates with respect to the connecting rod 153. More concretely, if the first finger 147 rotates in a clockwise direction in the drawing, the second finger 149 rotates in a counter-clockwise direction in the drawing, and vice versa, such that the first finger 147 and the second finger 149 can cooperatively operate to grasp or release a steering wheel 400 of a vehicle.

A third connecting rod 158, which is connected respectively to the first and second plates 125 and 127, is provided at a side of the first finger 147 such that the third connecting rod 157 can restrict a pivotal motion of the first finger 147. Similarly, a fourth connecting rod 159, which is connected respectively to the first and second plates 125 and 127, is provided at a side of the second finger 149 such that the fourth connecting rod 159 can restrict a pivotal motion of the second finger 149. As shown in FIG. 5, the third connecting rod 158 is positioned to restrict a counter-clockwise rotation of the first finger 147, and the fourth connecting rod 159 is positioned to restrict a counter-clockwise rotation of the second finger 149.

The elastic member 155 provides the first finger 147 with an elastic force, causing it to rotate in a counter-clockwise direction. Accordingly, the elastic member 155 biases the first finger 147 so that the first finger 147 and the second finger 149 are in a grasping state.

That is, if the elastic member 155 is in a relaxed state, the first finger 147 and the second finger 149 are positioned as shown by the dotted line in FIG. 5. If an external force in a direction as shown in the drawing is transmitted to the first finger 147 by a vehicle crash, the elastic member 155 is expanded by the external force so that the first finger 147 rotates in a clockwise direction and the second finger 149 rotates in a counter-clockwise direction, such that the hand unit 105 is separated from the steering wheel 400.

That is, because the hand unit 105 of the arm assembly 100 according to the preferred embodiment of the present invention is provided with the elastic member 155 that elastically biases the first finger 147, the hand unit 105 can realize a human-like force acting on the first and second fingers 147 and 149.

Although preferred embodiments of the present invention have been described in detail hereinabove, it should be clearly understood that many variations and/or modifications of the basic inventive concepts herein taught which may appear to those skilled in the present art will still fall within the scope of the present invention, as defined in the appended claims.

In the arm assembly according to the preferred embodiment of the present invention, the lower arm unit is driven by the motor and the gear unit, so that the arm assembly can operate similarly to a human arm. Consequently, damage to a human body can be more accurately determined through a crash test using the arm assembly according to the preferred embodiment of the present invention.

Furthermore, because the fingers of the hand unit are elastically biased, the hand unit can grasp the steering wheel, and then release the steering wheel when an external force acts on the fingers. Consequently, the hand unit operates similarly to a human hand.

## Claims

1. An arm assembly for a crash test dummy comprising:
an upper arm unit (101) of which an upper end portion is connected to a body of the crash test dummy;
a lower arm unit (103) pivotally connected to a lower end portion of the upper arm unit;
a wrist joint (107) of which a first end is rotatably connected to the lower arm unit; and
a hand unit (105) pivotally connected to a second end of the wrist joint,
wherein the hand unit is configured to grasp a steering wheel of a vehicle and to be separated from the steering wheel by a force,
**characterized in that** the arm assembly comprises:
a first plate (125) and a second plate (127) that are disposed to face each other;
a first connecting rod (129) coupled respectively to the first and second plates,
the wrist joint (107) being pivotally connected to the first connecting rod (129);
a second connecting rod (145) coupled respectively to the first and second plates such that the second connecting rod restricts pivotal motions of the (145,129) wrist joint with respect to the first connecting rod;
a first finger unit (147) pivotally coupled to the first and second plates (125,127);
a second finger unit (149) pivotally coupled to the first and second plates (125, 127); and the second finger unit being connected to the first finger unit such that the second finger unit moves together with the first finger unit; and
an elastic member (155) biasing the first finger unit so that the first finger unit and the second finger unit are in a grasping state.

2. The arm assembly of claim 1, wherein the hand unit further comprises a third connecting rod (157) connected respectively to the first and second plates such that the third connecting rod restricts a pivotal motion of the first finger unit.

3. The arm assembly of claim 1, wherein the hand unit further comprises a fourth connecting rod connected (159) respectively to the first and second plates such that the fourth connecting rod restricts a pivotal motion of the second finger unit.

4. The arm assembly of claim 1, wherein the elastic member is a coil spring.

5. The arm assembly of claim 1, wherein the upper arm comprises:
a housing (109); and
a driving device (111) disposed in the housing and driving the lower arm unit.

6. The arm assembly of claim 5, wherein the driving device comprises:
a motor (113); and
a gear unit (115) that is driven by the motor, the gear unit configured to drive the lower arm unit to undergo pivotal motions.

7. An arm assembly of claim 1, wherein a circular recession (135) is formed on an outer periphery of a first end portion of the wrist joint, a cylindrical recession is formed in the lower arm unit, a circular protrusion (173) is formed along an inner periphery of the cylindrical recession, and the first end of the wrist joint is inserted into the cylindrical recession such that the circular recession is fitted into the circular protrusion.

8. The arm assembly of claim 7, wherein the hand unit comprises a first plate and a second plate that are disposed to face each other, a circular plate (131) having a through hole (133) formed in a center portion thereof is provided in a second end of the wrist joint, the circular plate is disposed between the first and second plates, and the circular plate is connected to the first and second plates through a connecting rod that is rotatably inserted into the through hole.

9. The arm assembly of claim 7 or 8, wherein a friction member (137) is disposed between the circular plate of the wrist joint and the first and second plates of the hand unit.

## Patentansprüche

1. Arm-Anordnung für eine Aufpralltest-Attrappe, aufweisend:
eine obere Handeinheit (101), deren oberer Endabschnitt mit einem Körper einer Aufpralltest-Attrappe verbunden ist;
eine untere Armeinheit (103), die gelenkig mit einem unteren Endabschnitt der oberen Armeinheit verbunden ist;
ein Handgelenk-Verbindungsstück (107), von dem ein erstes Ende drehbar mit der unteren Armeinheit verbunden ist; und
eine Handeinheit (105), die gelenkig mit einem zweiten Ende des Handgelenk-Verbindungsstücks (107) verbunden ist,
wobei die Handeinheit eine Gestalt hat, bei der sie ein Fahrzeug-Lenkrad greifen kann und aufgrund einer Kraft von dem Lenkrad getrennt werden kann,
**dadurch gekennzeichnet, dass** die Arm-Anordnung aufweist:
eine erste Platte (125) und eine zweite Platte (127), die einander gegenüberliegend angeordnet sind;
eine erste Verbindungsstange (129), die an die erste Platte und die zweite Platte angeschlossen ist,
wobei das Handgelenk-Verbindungsstück (107) gelenkig mit der ersten Verbindungsstange (129) verbunden ist,
eine zweite Verbindungsstange (145), die an die erste Platte und die zweite Platte angeschlossen ist, so dass die zweite Verbindungsstange (145) Gelenkbewegungen des Handgelenk-Verbindungsstücks in Bezug auf die erste Verbindungsstange (129) einschränkt;
eine erste Fingereinheit (147), die gelenkig mit der ersten Platte (125) und mit der zweiten Platte (127) verbunden ist,
eine zweite Fingereinheit (149), die gelenkig mit der ersten Platte (125) und mit der zweiten Platte (127) verbunden ist, wobei die zweite Fingereinheit mit der ersten Fingereinheit derart verbunden ist, dass sich die zweite Fingereinheit zusammen mit der ersten Fingereinheit bewegt; und
ein elastisches Element (155), das die erste Fingereinheit derart vorspannt, dass sich die erste Fingereinheit und die zweite Fingereinheit in einem Greifzustand befinden.

2. Arm-Anordnung nach Anspruch 1, wobei die Handeinheit ferner eine dritte Verbindungsstange (157) aufweist, die die erste Platte und die zweite Platte derart verbindet, dass die dritte Verbindungsstange eine gelenkige Bewegung der ersten Fingereinheit einschränkt.

3. Arm-Anordnung nach Anspruch 1, wobei die Handeinheit ferner eine vierte Verbindungsstange (159) aufweist, die die erste Platte und die zweite Platte verbindet, so dass die vierte Verbindungsstange eine Gelenkbewegung der zweiten Fingereinheit einschränkt.

4. Arm-Anordnung nach Anspruch 1, wobei das elastische Element eine Spulenfeder ist.

5. Arm-Anordnung nach Anspruch 1, wobei der obere Arm aufweist:
ein Gehäuse (109); und eine Antriebsvorrichtung (111), die in dem Gehäuse angeordnet ist und die untere Armeinheit antreibt.

6. Arm-Anordnung nach Anspruch 5, wobei die Antriebsvorrichtung aufweist:
einen Motor (113); und
eine von dem Motor angetriebene Getriebeeinheit (115), die zum Antrieb der unteren Armeinheit zur Durchführung von Gelenkbewegungen ausgebildet ist.

7. Arm-Anordnung nach Anspruch 1, wobei eine Umfangsvertiefung (135) an einem äußeren Umfang eines ersten Endabschnitts des Handgelenk-Verbindungsstücks gebildet ist, eine zylindrische Ausnehmung (171) in der unteren Armeinheit gebildet ist, ein Umfangsvorsprung (173) entlang eines inneren Umfangs der zylindrischen Ausnehmung gebildet ist und das erste Ende des Handgelenk-Verbindungsstücks in die zylindrische Ausnehmung eingesetzt ist, so dass die Umfangsvertiefung (135) mit dem Umfangsvorsprung zusammenpasst.

8. Arm-Anordnung nach Anspruch 7, wobei die Handeinheit eine erste Platte und eine zweite Platte, die einander gegenüberliegend angeordnet sind, aufweist, eine Rundscheibe mit einem in einem mittleren Abschnitt derselben angeordneten Durchgangsloch (133) in einem zweiten Ende des Handgelenk-Verbindungsstücks vorgesehen ist, die Rundscheibe zwischen der ersten Platte und der zweiten Platte angeordnet ist und die Rundscheibe mit der ersten Platte und der zweiten Platte über eine Verbindungsstange, die drehbar in dem Durchgangsloch eingesetzt ist, verbunden ist.

9. Arm-Anordnung nach Anspruch 7 oder 8, wobei ein Reibungselement (137) zwischen der Rundscheibe des Handgelenk-Verbindungsstücks und der ersten Platte und der zweiten Platte der Handeinheit angeordnet ist.

## Revendications

1. Ensemble de bras pour un mannequin de test de collision, comprenant :
une unité de bras supérieur (101) dont une portion d'extrémité supérieure est reliée à un corps du mannequin de test de collision ;
une unité de bras inférieur (103) reliée en pivot à une portion d'extrémité inférieure de l'unité de bras supérieur ;
une liaison de poignet (107) dont une première extrémité est reliée libre en rotation à l'unité de bras inférieure ; et
une unité (105) de main reliée en pivot à une seconde extrémité de la liaison de poignet,
dans lequel l'unité de main est configurée pour agripper un volant de direction d'un véhicule et pour être séparée du volant de direction par une force,
**caractérisé en ce que** l'ensemble de bras comprend :
une première plaque (125) et une seconde plaque (127) qui sont disposées en regard l'une de l'autre ;
une première barre de liaison (129) accouplée respectivement aux première et seconde plaques ;
la liaison de poignet (107) étant reliée en pivot à la première barre de liaison (129) ;
une seconde barre de liaison (145) couplée respectivement aux première et seconde plaques de telle manière que la seconde barre de liaison restreigne les mouvements de pivotement de la liaison de poignet par rapport à la première barre de liaison ;
une première unité de doigt (147) couplée en pivot aux première et seconde plaques (125, 127) ;
une seconde unité de doigt (149) couplée en pivot aux première et seconde plaques (125, 127) et la seconde unité de doigt étant reliée à la première unité de doigt de telle manière que la seconde unité de doigt se déplace avec la première unité de doigt : et
un élément élastique (155) qui sollicite la première unité de doigt de telle manière que la première unité de doigt et la seconde unité de doigt soient dans un état d'agrippement.

2. Ensemble de bras selon la revendication 1, dans lequel l'unité de main comprend en outre une troisième barre de liaison (157) reliée respectivement aux première et seconde plaques de telle manière que la troisième barre de liaison restreigne un mouvement de pivotement de la première unité de doigt.

3. Ensemble de bras selon la revendication 1, dans lequel l'unité de main comprend en outre une quatrième barre de liaison (159) reliée respectivement aux première et seconde plaques de telle manière que la quatrième barre de liaison restreigne un mouvement de pivotement de la seconde unité de doigt.

4. Ensemble de bras selon la revendication 1, dans lequel l'élément élastique est un ressort hélicoïdal.

5. Ensemble de bras selon la revendication 1, dans lequel le bras supérieur comprend :
un boîtier (109) ; et
un dispositif d'entraînement (111) disposé dans le boîtier et qui entraîne l'unité de bras inférieur.

6. Ensemble de bras selon la revendication 5, dans lequel le dispositif d'entraînement comprend :
un moteur (113) ; et
une unité d'engrenage (115) qui est entraînée par le moteur, l'unité d'engrenage étant configurée pour entraîner l'unité de bras inférieur en mouvements de pivotement.

7. Ensemble de bras selon la revendication 1, dans lequel un évidement circulaire (135) est formé sur une périphérie extérieure d'une première portion d'extrémité de l'articulation de poignet, un évidement cylindrique est formé dans l'unité de bras inférieur, une protubérance cylindrique (173) est formée le long d'une périphérie intérieure de l'évidement cylindrique, et la première extrémité de la liaison de poignet est insérée dans l'évidement cylindrique de telle manière que l'évidement circulaire soit ajusté dans la protubérance circulaire.

8. Ensemble de bras selon la revendication 7, dans lequel l'unité de main comprend une première plaque et une seconde plaque qui sont disposées en regard l'une de l'autre, une plaque circulaire (131) ayant un trou traversant (133) formé dans sa partie centrale et prévue dans une seconde extrémité de l'articulation de poignet, la plaque circulaire étant disposée entre les premières et seconde plaques et la plaque circulaire étant reliée aux première et seconde plaques par une barre de liaison qui est insérée libre en rotation dans le trou traversant.

9. Ensemble de bras selon la revendication 7 ou 8, dans lequel un élément de friction (137) est disposé entre la plaque circulaire de la liaison de poignet et les première et seconde plaques de l'unité de main.
